# EUROPÄISCHE PATENTSCHRIFT

(11) **EP 1 502 883 B1**
(45) Veröffentlichungstag und Bekanntmachung des Hinweises auf die Patenterteilung: **02.04.2008**
(21) Anmeldenummer: 04090306.4
(22) Anmeldetag: 30.07.2004
(51) Int. Cl.: B65G 21/14, B65G 47/64, B65G 47/26

(54) **Vorrichtung zum Quertransport von Riesen**
Device for the transverse conveying of reams
Dispositif de transport transversal de rames de papier

(30) Priorität: 01.08.2003 EP 03090247
(43) Veröffentlichungstag der Anmeldung: 02.02.2005
(73) Patentinhaber: E.C.H. Will GmbH, D-22529 Hamburg (DE)
(72) Erfinder: Voigtländer, Volkmar, 22147 Hamburg (DE)
(74) Vertreter: Wenzel & Kalkoff

(56) Entgegenhaltungen:
- EP-A- 0 919 494
- CH-A- 685 990
- DE-B- 1 149 656
- DE-B- 1 209 054

## Beschreibung

Die Erfindung betrifft eine Vorrichtung zum Fördern von Gegenständen quer zu ihrer Antransportrichtung, im wesentlichen umfassend zwei endlos umlaufend ausgebildete Förderelemente, die jeweils einen Transportbereich und einen Rückführbereich aufweisen und unabhängig voneinander mittels eines Antriebs antreibbar sind, so dass antransportierte Gegenstände beim Antrieb der Förderelemente zu beiden Seiten der Vorrichtung transportiert werden können, und einander unter Bildung einer Trennfuge mit einer gedachten Mittelachse gegenüberliegen, jeweils einen Satz Umlenkwalzen zum Führen, Spannen und Ausgleichen der Förderelemente, ein Verschiebeelement zum Verändern des Transportbereichs bzw. Rückführbereichs, wobei das Verschiebeelement die Förderelemente miteinander verbindet, sowie ein Ausgleichselement zum Kompensieren der Veränderung des Rückführbereichs bzw. Transportbereichs. Eine solche Vorrichtung ist z.B. aus der CH 685 990 A5 bekannt.

Derartige bekannte Vorrichtungen dienen z.B. in der Papierindustrie zum Transport von gestapelten Blättern, Bögen oder dergleichen aus Pappe, Papier, Kunststoff oder anderen stapelfähigen Materialien aus einer einer Produktionsmaschine nachgeordneten Sammelstation zu Packmaschinen oder dergleichen.

Innerhalb einer üblicherweise mehrnutzigen Produktionsmaschine werden durch Längsund/oder Querschneiden von Materialbahnen, z.B. Papierbahnen, kontinuierlich sogenannte Papierriese in Form von Blattlagen oder Blattstapeln gebildet. Mehrere eng nebeneinander liegende Papierriese bilden eine Riesreihe, die im folgenden auch als Riesstrang bezeichnet wird. Dieser Riesstrang wird in einer Sammelstation abgelegt. Mittels geeigneter Mittel, zweckmäßigerweise einem Zangensystem, wird der Riesstrang auf eine Vorrichtung zum Fördern der Riese quer zu ihrer Antransportrichtung gezogen bzw. auf dieser abgesetzt. Ein Riesstrang besteht mindestes aus zwei Riesen, ist jedoch auf ein Vielfaches erweiterbar. Jeder Riesstrang wird in der Regel jedoch weiterverarbeitet, nämlich vorzugsweise verpackt. Die einzelnen Vorrichtungen, z.B. die Produktionsmaschine und die Packmaschine sind daher mit ihren jeweiligen Leistungsfähigkeiten aufeinander abgestimmt. Üblicherweise produziert z.B. eine 14-nutzige Produktionsmaschine mehr Riese, als eine einzelne Packmaschine abnehmen kann. Um die Produktivität solcher Produktlinien zu erhöhen, also die Abnahme an die Produktion anzupassen, sind vorzugsweise zu beiden Seiten der Produktionsmaschine bzw. der Sammelstation Packmaschinen angeordnet. Im Regelfall werden beide Packmaschinen gleichmäßig mit Riesen versorgt. Im Beispielsfall bedeutet das, daß ein Riesstrang aus zehn Riesen, also z.B. aus zehn Nutzen gebildete Stapel mit 500 Blatt Papier des Formats DIN A4, gleichmäßig aufgeteilt wird, so daß die Vorrichtung zum Fördern der Riese quer zu ihrer Antransportrichtung zu beiden Seiten jeweils fünf Riese abtransportiert. Hierzu ist die Vorrichtung im Bereich einer Trennfuge geteilt, so daß eine Förderung einer Anzahl von Riesen zu jeder Seite gewährleistet ist. Diese Trennfuge ist verschiebbar, um eine ungleiche Belieferung der zu beiden Seiten angeordneten Packmaschinen zu ermöglichen, z.B. für den Fall, daß eine der Packmaschinen wegen eines Defektes einen Stillstand aufweist oder weil die Packmaschinen unterschiedlich ausgelastet werden sollen. Zum Verschieben der Trennfuge wird das Verschiebeelement in die eine oder andere Richtung verschoben. Dadurch verlängert sich die Auflagefläche, genauer der Transportbereich, des einen Förderelementes, während sich gleichzeitig der Transportbereich des anderen Förderelementes um den gleichen Betrag verkürzt. Hierzu sind Ausgleichswalzen ebenfalls am Verschiebeelement angeordnet. Sowohl eine Verlängerung des Transportbereichs eines Förderelementes als auch die Verkürzung des Transportbereichs des anderen Förderelementes wird durch eine entsprechende Anpassung der Rückführbereiche der Förderelemente kompensiert.

Nachteilig an der bekannten Vorrichtung ist jedoch, daß bedingt durch die Dimension des Verschiebeelementes, die zur Aufnahme von Führungs- oder Spannwalzen einerseits und Ausgleichswalzen andererseits dient, lediglich ein kurzer Verfahrweg realisiert werden kann. Bei einer Standardnutzenbreite von z.B. DIN A4 ist lediglich eine Verschiebung um eine Nutzenbreite aus der Mittelposition heraus möglich. Mit anderen Worten gewährleistet die bekannte Vorrichtung eine Aufteilung von 6:4, 5:5 und 4:6. Die Aufteilung des Riesstranges ist daher sehr begrenzt. Des weiteren ist es zwar auch möglich, daß beide Förderelemente in dieselbe Richtung angetrieben sind, so daß eine Aufteilung von 10:0 bzw. 0:10 möglich ist. Da die Kapazität der Packmaschinen aber begrenzt ist, also die Produktionsmaschine mehr Riese produziert, als von einer Packmaschine abgenommen werden können, muß zwangsläufig die Leistung der Produktionsmaschine gedrosselt werden, was wiederum zu Produktionseinbußen führt.

Es ist daher Aufgabe der vorliegenden Erfindung, eine einfach und kompakte Vorrichtung zu schaffen, die eine flexiblere Verteilung der antransportierten Riese an die nachfolgenden Packmaschinen gewährleistet.

Diese Aufgabe wird durch eine Vorrichtung der eingangs genannten Art dadurch gelöst, daß das Verschiebeelement und das Ausgleichselement separate Elemente sind. Dadurch ist auf überraschend einfache und effektive Weise eine Erhöhung der Flexibilität gegeben. Die Schaffung eines vom Verschiebeelement separaten Ausgleichselement trennt die Funktionen Verschieben der Trennfuge und Ausgleichen der Förderelemente aufgrund der Verschiebung der Trennfuge voneinander, so daß bei gleicher Baugröße der Vorrichtung ein größerer Verfahrweg des Verschiebeelementes erzeugt wird. Mit der erfindungsgemäßen Lösung ist es z.B. möglich, ein Strang aus zehn Riesen auch im Verhältnis 3:7 bzw. 7:3 aufzuteilen.

Vorteilhafterweise ist das Verschiebeelement aktiv antreibbar und das Ausgleichselement passiv bewegbar. Dadurch ist lediglich ein einzelner Antrieb erforderlich. Durch den Antrieb des Verschiebeelementes ist die Veränderung, nämlich Verlängerung bzw. Verkürzung des Transportbereichs bei gleichzeitiger Verkürzung bzw. Verlängerung des Rückführbereichs möglich, wobei der Ausgleich zwangsläufig und unter Beibehaltung der Spannung der Förderelemente erfolgt.

In einer bevorzugten Ausführungsform stehen das Verschiebeelement und das Ausgleichselement über die Förderelemente in Wirkverbindung, so daß die Verschiebung des Verschiebelementes ohne zusätzliche Mittel unmittelbar auf das Ausgleichselement übertragbar ist.

Besonders bevorzugt ist die Vorrichtung, bei der am Verschiebeelement bzw. Verschiebewagen nur jeweils eine Spann- oder Führungswalze jedes Satzes Umlenkrollen angeordnet ist. Dadurch kann eine besonders kompakte Bauweise der Vorrichtung erreicht werden, die gleichzeitig zu einer Vergrößerung des Verschiebeweges des Verschiebeelementes führt.

Vorzugsweise ist eine gemeinsame Spannvorrichtung für beide Förderelemente vorgesehen, wodurch zum einen Kosten gespart werden und zum anderen eine kompakte Bauform der Vorrichtung realisiert wird.

Vorteilhafterweise ist jedem Transportbereich jeweils eine Stützeinrichtung zugeordnet, die ihrerseits jeweils in Transportrichtung des Verschiebeelementes längenveränderbar sind. Damit wird eine Unterstützung der Transportbereiche erzielt, so daß insbesondere bei Beaufschlagen der Transportbereiche durch Last in Form von Riesstapeln oder durch Bedienpersonen ein Durchhängen der Transportbereiche wirksam verhindert wird.

Weitere Merkmale und Ausführungsformen der Erfindung ergeben sich aus den Unteransprüchen und der Beschreibung. Eine besonders bevorzugte Ausführungsform sowie das Grundprinzip der Erfindung werden anhand der beigefügten Zeichnung näher erläutert. In der Zeichnung zeigt:
- Fig. 1: eine Seitenansicht der gesamten Vorrichtung ohne Seitenverkleidung,
- Fig. 2: eine schematische Darstellung eines Teils der Vorrichtung, nämlich die ausschnittsweise Darstellung der Förderelemente mit Verschiebewagen und Ausgleichswagen in symmetrischer Stellung der Förderelemente,
- Fig. 3: die Darstellung gemäß Figur 2 mit nach rechts verschobenem Verschiebewagen,
- Fig. 4: die Darstellung gemäß Figur 2 mit nach links verschobenem Verschiebewagen,
- Fig. 5a bis 5d: eine Schrittfolge der Förderung von Riesen quer zu ihrer Antransportrichtung mit gleichmäßiger Riestrennung,
- Fig. 6a bis 6d: eine Schrittfolge der Förderung von Riesen quer zu ihrer Antransportrichtung mit ungleichmäßiger Riestrennung, und
- Fig. 7: eine perspektivische Ansicht einer Stützeinrichtung zum Stützen der Transportbereiche der Vorrichtung gemäß Figur 1.

Die Erfindung betrifft eine Vorrichtung zum Transport von Papierriesen quer zu ihrer Antransportrichtung aus einer Produktionsmaschine.

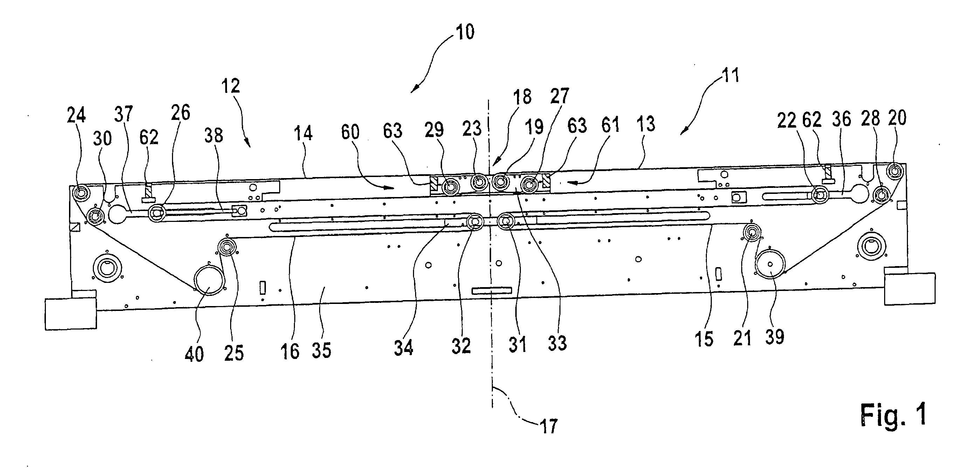

Die Figur 1 zeigt eine Vorrichtung 10 zum Fördern von Blattlagen oder Blattstapeln, sogenannten Riesen, quer zu ihrer Antransportrichtung aus einer (nicht dargestellten) Produktionsmaschine. Die Vorrichtung 10 umfaßt zwei separate Förderelemente 11, 12, die in der bevorzugten Ausführungsform als Transporttücher ausgebildet sind. Es ist allerdings auch möglich, daß die Förderelemente 11, 12 aus anderen üblichen Fördermitteln, z.B. Transportbändern, Zahnriemen oder dergleichen gebildet sind. Die Förderelemente 11, 12 sind jeweils endlos umlaufend ausgebildet und weisen einen Transportbereich 13 bzw. 14 sowie einen Rückführbereich 15 bzw. 16 auf. Die Transportbereiche 13, 14 sind jeweils den zu fördernden Riesen zugewandt und bilden quasi die Auflagefläche für die Riese, wobei sich die Auflageflächen beider Förderelemente 11, 12 in derselben Ebene befinden und insgesamt einen Transportbereich konstanter Länge bilden. Die Rückführbereiche 15, 16 sind schleifenartig ausgebildet und dienen zum Kompensieren der Veränderung der Transportbereiche 13, 14 sowie zum Halten der Spannung der Förderelemente 11, 12.

Beide Förderelemente 11, 12 liegen einander gegenüber und bilden zwischen sich im Bereich einer gedachten Mittelachse 17 eine Trennfuge 18. Zum Führen, Spannen und Ausgleichen der Förderelemente 11, 12 weisen diese jeweils einen Satz Umlenkwalzen auf. Jeder Satz Umlenkwalzen besteht in der gezeigten Ausführungsform aus mehreren, vorzugsweise vier Spann- oder Führungswalzen 19, 20, 21, 22 bzw. 23, 24, 25, 26 zwei Steuerwalzen 27, 28 bzw. 29, 30 sowie jeweils einer Ausgleichswalze 31 bzw. 32. Es ist jedoch auch denkbar, daß jeder Satz Umlenkwalzen zusätzliche Spann-, Führungs-, Steuer- oder Ausgleichswalzen aufweist. In besonders einfachen Ausführungsformen kann auch auf einzelne Spann-, Führungs- und Ausgleichswalzen verzichtet werden. Des weiteren ist anstelle der Steuerwalzen 27, 28 bzw. 29, 30 auch der Einsatz anderer Steuerelemente für die Förderelemente 11, 12 möglich. So können z.B. sogenannte Profil-/Nut-Verbindungen zur Steuerung der Förderelemente 11, 12 vorgesehen sein. Dazu weisen mindestens einige der von den Förderelementen 11, 12 umschlungenen Walzen radial ausgerichtete Nuten auf, in denen korrespondierende Profile, die sich in Längsrichtung an den Förderelementen 11, 12 auf der den Walzen zugewandten Seite befinden, laufen. Dadurch wird ein seitliches Ablaufen der Förderelemente 11, 12 von den Walzen wirksam verhindert und eine einfache Form der Steuerung erreicht.

Die Trennfuge 18 ist in ihrer Position variabel, und zwar durch ein Verschiebeelement 33. Das Verschiebeelement 33, das bevorzugt als Verschiebewagen ausgebildet ist, verbindet die Förderelemente 11, 12 im Bereich der Trennfuge 18 miteinander. Am Verschiebeelement 33 sind die Spann- oder Führungswalze 19 und die Steuerwalze 27 des Förderelementes 11 sowie die Spann- oder Führungswalze 23 und die Steuerwalze 29 des Förderelementes 12 angeordnet, wobei die Trennfuge 18 zwischen den beiden Spann- oder Führungswalzen 19 und 23 gebildet ist. Alternativ kann auf die Steuerwalzen 27 und 29 auch verzichtet werden. Das Verschiebeelement 33 ist in horizontaler Ebene in beide Richtung verschiebbar bzw. verfahrbar. Zum aktiven Antrieb des Verschiebeelementes 33 ist diesem ein (nicht dargestellter) Betätigungsmechanismus zugeordnet. Durch die beschriebene Anordnung ist eine Verschiebung des Verschiebeelementes 33 ohne Spannungsverlust der Förderelemente 11, 12 gewährleistet.

Da die Förderelemente 11, 12 jeweils von konstanter Länge sind, ist beim Verschieben des Verschiebeelementes 33 eine Kompensation der Verkürzung bzw. Verlängerung des Transportbereichs 13 bzw. 14 erforderlich. Hierzu ist ein Ausgleichselement 34 vorgesehen, das als separates Element ausgebildet und parallel in entgegengesetzter Richtung zum Verschiebeelement 33 bewegbar ist. Das Ausgleichselement 34 ist ebenfalls bevorzugt als Ausgleichswagen ausgebildet. Am Ausgleichselement 34 sind die beiden Ausgleichswalzen 31, 32 angeordnet. Das Ausgleichselement 34 ist frei von Antriebsmitteln und verbindet die Förderelemente 11, 12 in ihren Rückführbereichen 15, 16. Durch die Förderelemente 11, 12 befinden sich das Verschiebeelement 33 und das Ausgleichselement 34 in Wirkverbindung miteinander, derart, daß der Antrieb des Verschiebeelementes 33 auf das Ausgleichselement 34 übertragen wird. Das Ausgleichselement 34 wird quasi durch das Verschiebeelement 33 mitgezogen, allerdings in entgegengesetzte Richtung.

Die Spann- oder Führungswalzen 20, 21, 22 bzw. 24, 25, 26 sind ortsfest an einem Stützelement, zweckmäßigerweise an einer Seitenwand 35 bzw. in einer Führung 36, 37 angeordnet. Die Führungen 36, 37 sind als Langlöcher ausgebildet, so daß die Position der Spann- oder Führungswalzen 22, 26 verstellbar ist. Im Bereich einer der beiden Führungen 36, 37, in der Ausführungsform im Bereich der Führung 37, ist eine Spannvorrichtung 38 vorgesehen, mittels der die Spannung der Förderelemente 11, 12 einstellbar ist. Des weiteren ist es auch möglich, daß die Spannvorrichtung 38 im Bereich der Führung 36 oder an beiden Führungen 36, 37 gleichzeitig vorgesehen ist.

Jedes Förderelement 11, 12 verfügt über ein separates Antriebsmittel. Dem Förderelement 11 ist daher eine Antriebswelle 39 und dem Förderelement 12 eine Antriebswelle 40 zugeordnet. Die Antriebswellen 39, 40 sind jeweils im Rückführbereich 15, 16 der Förderelemente 11, 12 angeordnet. Jede Antriebswelle 39, 40 ermöglicht unabhängig voneinander eine Bewegung der Fördermittel 11, 12 in beide Richtung und mit frei wählbarer Geschwindigkeit. Im Bereich der Antriebswellen 39, 40 ist jeweils eine Umlenkwalze, nämlich die Spann- oder Führungswalze 21 bzw. 25 angeordnet, um die Spannung des jeweiligen Förderelementes 11 bzw. 12 aufrechtzuerhalten.

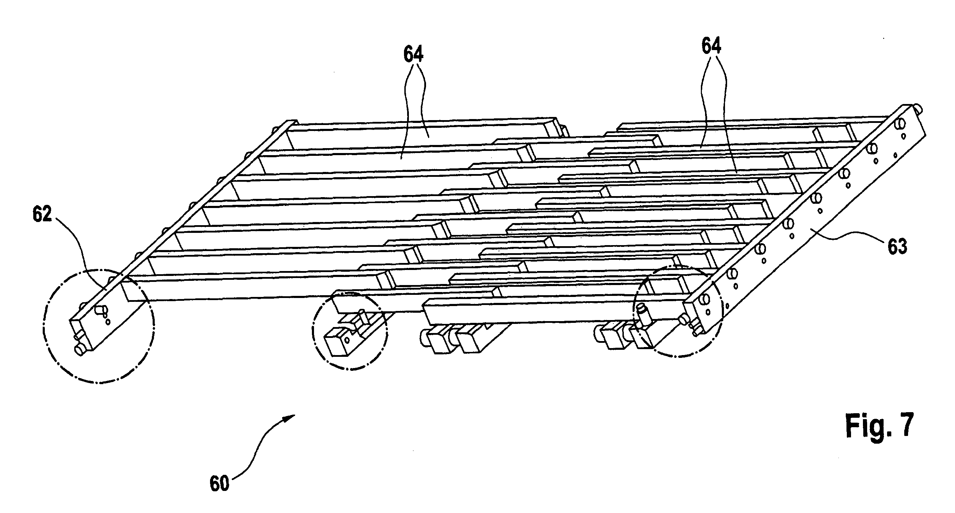

Optional kann im Bereich der Transportbereiche 13, 14 jeweils eine Stützeinrichtung 60, 61, die auch als Abdeckung bezeichnet werden kann, vorgesehen sein. Jede Stützeinrichtung 60, 61 ist in der gezeigten Ausführungsform teleskopartig in Längsrichtung des Verschiebeweges in Pfeilrichtung 47 und 48 des Verschiebeelementes 33 längenveränderbar. Eine beispielhafte Stützeinrichtung 60 ist in Figur 7 dargestellt. Die gezeigte Stützeinrichtung 60 ist in Figur 1 in der linken Bildhälfte abgebildet und weist eine feststehende Traverse 62 und eine bewegbare Traverse 63 auf. Zwischen den Traversen 62, 63 sind fingerartige Stützelemente 64 angeordnet, die sich in Bewegungsrichtung des Verschiebeelementes 33 erstrecken und ineinandergreifen. Die bewegliche Traverse 63 ist am Verschiebeelement 33 angeordnet und in Wirkverbindung mit diesem. Das bedeutet, daß die verschachtelten Stützelemente 64 bei Bewegung des Verschiebeelementes 33 in die eine Richtung zusammengeschoben und in die andere Richtung auseinandergezogen werden, so daß der über den Stützelementen 64 liegende Transportbereich 14 permanent unterstützt wird. Korrespondierend ist die Stützeinrichtung 61 ausgebildet. Anstelle der verschachtelten, ineinandergreifenden Stützelemente 64 können auch über- bzw. untereinanderliegende, zusammenschiebbare flächige Bleche oder dergleichen vorgesehen sein. Weitere nicht gezeigte Ausführungsformen weisen vollständig bewegliche und/oder flexible Stützeinrichtungen, wie z.B. Seilsysteme oder dergleichen, auf.

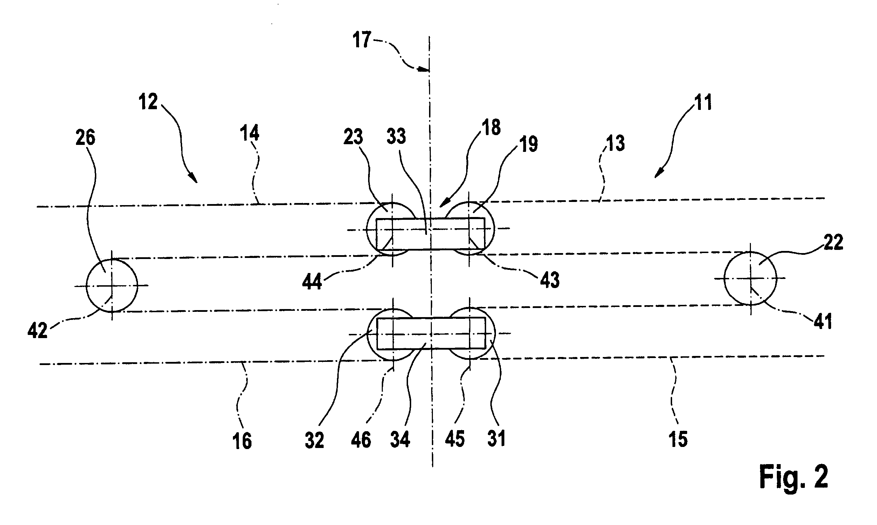

Anhand der Figuren 2 bis 4 wird das Grundprinzip der Erfindung noch detaillierter beschrieben. Die Förderelemente 11, 12 sind auf der Oberseite, also im Transportbereich 13 bzw. 14, über Spann- oder Führungswalzen 19 und 23 am Verschiebeelement 33 miteinander verbunden. Anders ausgedrückt ist jedes Förderelement 11, 12 an dem gemeinsamen Verschiebeelement 33 angeordnet, so daß beide Förderelemente 11, 12 in Wirkverbindung miteinander stehen. Unterhalb des Verschiebeelementes 33 ist das Ausgleichselement 34 angeordnet, an dem die Ausgleichswalzen 31, 32 befestigt sind. Zur Bildung eines schleifenartigen oder S-förmigen Verlaufs, also eines sogenannten S-Schlages der Förderelemente 11, 12 zur Bildung einer Spannung der Förderelemente 11, 12, sind die Spann- oder Führungswalzen 22, 26 nach innen, also weg von der Mittelachse 17 versetzt angeordnet. Mit anderen Worten liegen die Mittelachsen 41, 42 der Führungswalzen 22, 26 mit einem größeren Abstand zur Mittelachse 17 als die Mittelachsen 43 und 44 der Spann- oder Führungswalzen 19 bzw. 23 und die Mittelachsen 45, 46 der Ausgleichswalzen 31, 32.

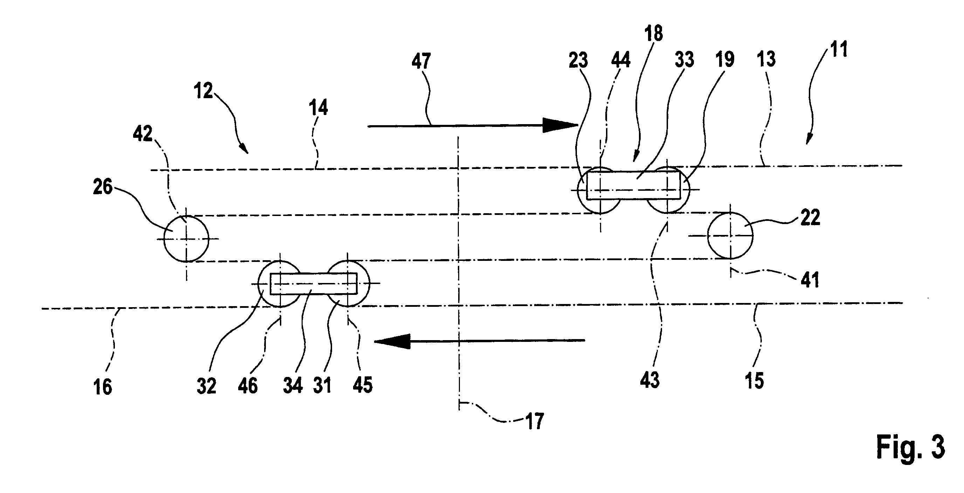

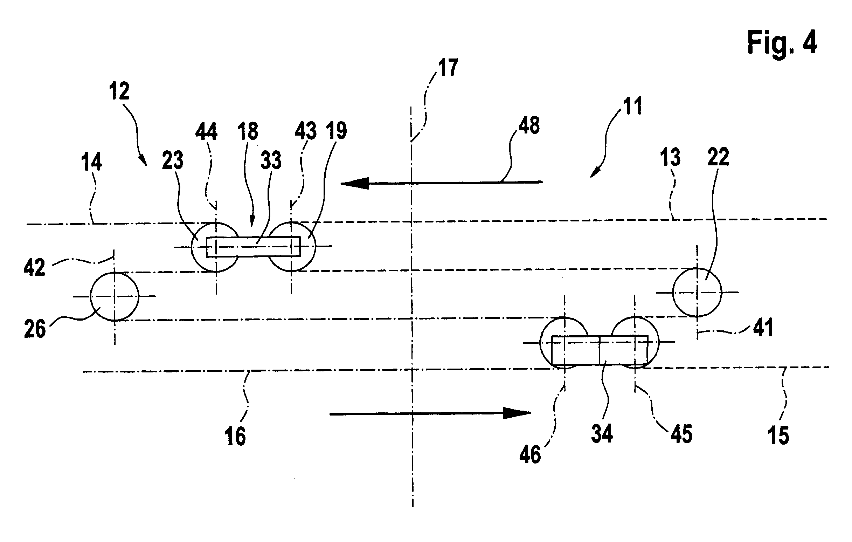

Wird das Verschiebeelement 33 ausgehend von der Mittelachse 17 nun nach rechts in Richtung des Pfeils 47 (siehe Figur 3) angetrieben, verkürzt sich der Transportbereich 13 des Förderelementes 11, während sich der Transportbereich 14 des Förderelementes 12 um den gleichen Betrag verlängert. Entsprechend verändert sich die Länge der Stützelemente 61, 62. Zur Kompensation der Verkürzung einerseits und Verlängerung andererseits wird das Ausgleichselement 34, das in Wirkverbindung zum Verschiebeelement 33 steht, gegenläufig zu diesem nach links bewegt, so daß sich der Rückführbereich 15 des Förderelementes 11 verlängert, während der Rückführbereich des Förderelementes 12 verkürzt wird. Bei einer Verschiebung des Verschiebeelementes 33 nach links in Richtung des Pfeils 48 (siehe Figur 4) ausgehend von der Mittelachse 17 erfolgt die Kompensation entsprechend umgekehrt. Bei sämtlichen Bewegungen des Verschiebeelementes 33 ist es erforderlich, den Verschiebeweg in beiden Richtungen derart zu begrenzen, daß die Mittelachsen 41 und 42 der Spann- oder Führungswalzen 22, 26 stets einen größeren Abstand zur Mittelachse 17 aufweisen als die Mittelachsen 43 bis 46.

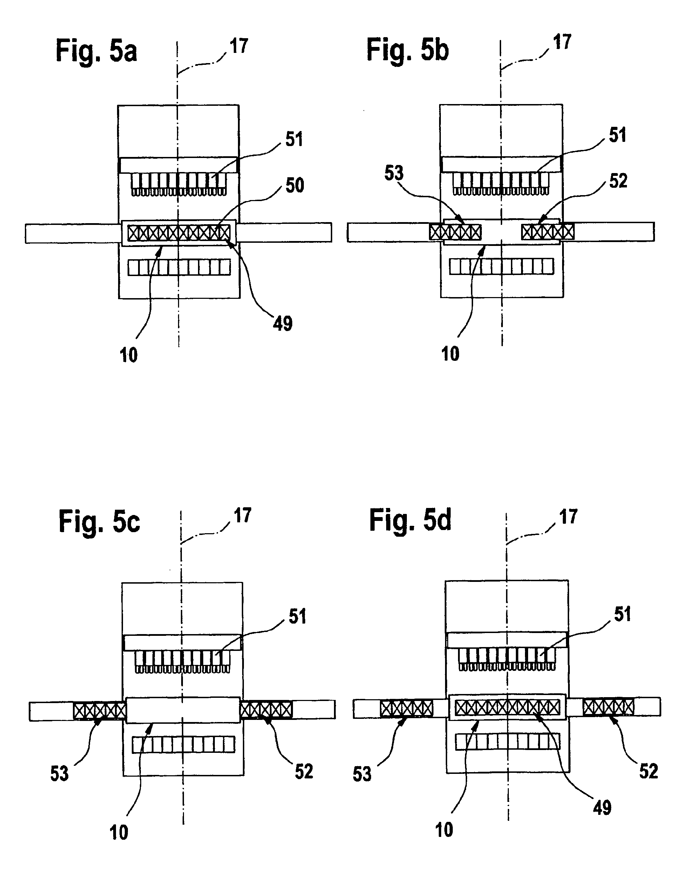

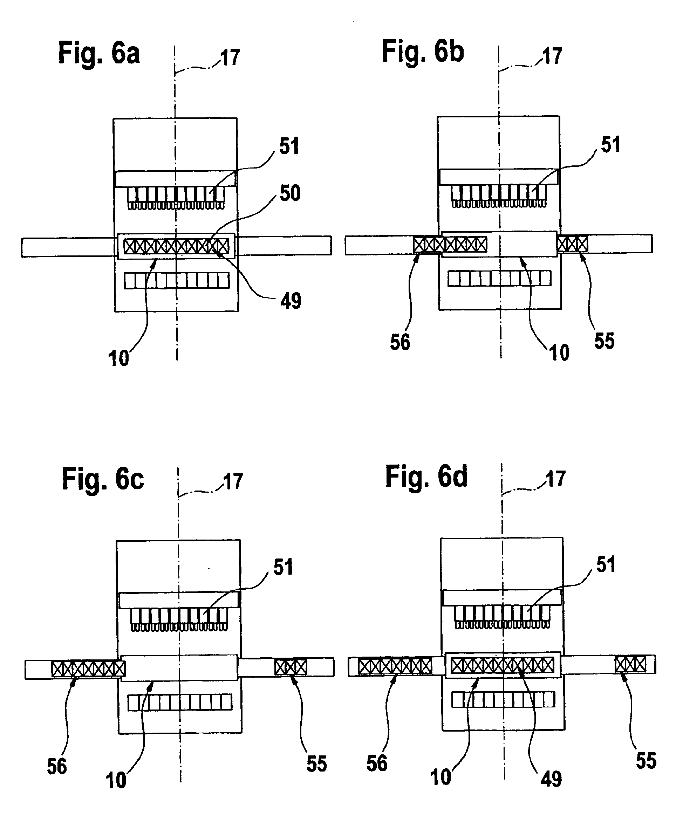

Verschiedene Optionen der Aufteilung eines Stranges 49 aus mehreren Riesen 50 werden anhand der Figuren 5 und 6 erläutert. Beide Figuren beschreiben die Förderung eines Stranges 49, der aus zehn Riesen besteht. In den Figuren 5a bis 5d wird die gleichmäßige Aufteilung des Stranges 49 gezeigt. Ein Großtakt der Produktionsmaschine, also der Strang 49, wird auf der Vorrichtung 10 abgelegt. Dies kann durch einen Zangenwagen 51 oder dergleichen erfolgen. Die Förderelemente 11, 12 stehen symmetrisch zur Mittelachse 17, so daß die jeweiligen Transportbereiche 13, 14 die gleiche Länge aufweisen. Der Strang 49 wird daher beim Antrieb der Förderelemente 11, 12 gleichmäßig getrennt, so daß zu beiden Seiten jeweils fünf Riese 50 transportiert werden. Die getrennten Riesstränge 52 und 53 werden dann auf einen Auslauf, z.B. ein Förderband, geschoben. Sobald die Vorrichtung 10 frei ist, d.h. sich kein Ries 50 mehr auf den Transportbereichen 13, 14 befindet, kann ein nächster Großtakt auf der Vorrichtung 10 abgelegt werden.

Die Figuren 6a bis 6d beschreiben eine Förderung mit einem ungleichmäßig zu trennenden Strang 49. Der Strang 49 wird mittels des Zangenwagens 51 oder dergleichen auf die Vorrichtung 10 gezogen und auf dieser abgelegt. Zuvor wurden jedoch die Förderelemente 11, 12 verstellt, derart, daß der Transportbereich 13 des Förderelementes 11 verkleinert und der Transportbereich 14 des Förderelementes 12 vergrößert wurde, und zwar um eine Länge, die etwa der Breite von zwei Nutzen bzw. Riesen 50 entspricht. Damit ist eine Teilung der Vorrichtung 10 im Verhältnis 70:30 bzw. 30:70 erfolgt. Sobald die Antriebswellen 39, 40 die Förderelemente 11, 12 in Bewegung setzen, werden die Teilstränge 55 und 56 auf Ausläufe transportiert. Wenn die Teilstränge 55, 56 die Vorrichtung 10 vollständig verlassen haben, kann ein neuer Strang 49 in den Bereich der Vorrichtung 10 geführt werden.

Mit der Vorrichtung 10 lassen sich auch andere als die gezeigten Teilstränge 52, 53, 55, 56 bilden. Dies hängt im wesentlichen vom jeweiligen Auftrag an den nachfolgenden Packmaschinen ab. Des weiteren ist es auch möglich, beide Förderelemente 11, 12 in dieselbe Richtung anzutreiben, so daß ein vollständiger Strang zu einer Seite gefördert werden kann.

## Patentansprüche

1. Vorrichtung zum Fördern von Gegenständen quer zu ihrer Antransportrichtung, im wesentlichen umfassend zwei endlos umlaufend ausgebildete Förderelemente (11, 12), die jeweils einen Transportbereich (13, 14) und einen Rückführbereich (15, 16) aufweisen und unabhängig voneinander mittels eines Antriebs antreibbar sind, so dass antransportierte Gegenstände beim Antrieb der Förderelemente (11,12) zu beiden Seiten der Vorrichtung transportiert werden können, und einander unter Bildung einer Trennfuge (18) mit einer gedachten Mittelachse (17) gegenüberliegen, jeweils einen Satz Umlenkwalzen zum Führen, Spannen und Ausgleichen der Förderelemente, ein Verschiebeelement (33) zum Verändern des Transportbereichs (13, 14) bzw. Rückführbereichs (15, 16), wobei das Verschiebeelement (33) die Förderelemente (11, 12) miteinander verbindet, sowie ein Ausgleichselement (34) zum Kompensieren der Veränderung des Rückführbereichs (15, 16) bzw. Transportbereichs (13, 14), **dadurch gekennzeichnet, daß** das Verschiebeelement (33) und das Ausgleichselement (34) separate Elemente sind.

2. Vorrichtung nach Anspruch 1, **dadurch gekennzeichnet, daß** das Ausgleichselement (34) die Förderelemente (11, 12) unabhängig vom Verschiebeelement (33) miteinander verbindet.

3. Vorrichtung nach Anspruch 1 oder 2, **dadurch gekennzeichnet, daß** das Verschiebeelement (33) aktiv antreibbar und das Ausgleichselement (34) passiv bewegbar ist.

4. Vorrichtung nach Anspruch 3, **dadurch gekennzeichnet, daß** das Verschiebeelement (33) und das Ausgleichselement (34) parallel und gegenläufig zueinander in einer horizontalen Ebene bewegbar sind, wobei die Bewegung des Verschiebeelementes (33) zwangsläufig auf das Ausgleichselement (34) übertragbar ist.

5. Vorrichtung nach einem der Ansprüche 1 bis 4, **dadurch gekennzeichnet, daß** das Verschiebeelement (33) mit dem Ausgleichselement (34) über die Förderelemente (11, 12) in Wirkverbindung steht.

6. Vorrichtung nach einem der Ansprüche 1 bis 5, **dadurch gekennzeichnet, daß** eine Verschiebung des Verschiebelementes (33) und damit der Trennfuge (18) mittels des Ausgleichselementes (34) kompensierbar ist.

7. Vorrichtung nach einem der Ansprüche 1 bis 6, **dadurch gekennzeichnet, daß** das Verschiebeelement (33) als Verschiebewagen und das Ausgleichselement (34) als Ausgleichswagen ausgebildet ist.

8. Vorrichtung nach einem der Ansprüche 1 bis 7, **dadurch gekennzeichnet, daß** jeder Satz Umlenkwalzen aus mindestens drei Spann- oder Führungswalzen (19, 20, 22; 23, 24, 26) und mindestens einer Ausgleichswalze (31; 32) besteht.

9. Vorrichtung nach Anspruch 8, **dadurch gekennzeichnet, daß** die Ausgleichswalzen (31; 32) am Ausgleichselement (34) bzw. Ausgleichswagen angeordnet sind.

10. Vorrichtung nach Anspruch 8 oder 9, **dadurch gekennzeichnet, daß** am Verschiebeelement (33) bzw. Verschiebewagen jeweils eine Spann- oder Führungswalze (19; 23) jedes Satzes angeordnet ist.

11. Vorrichtung nach einem der Ansprüche 1 bis 10, **dadurch gekennzeichnet, daß** die anderen Umlenkwalzen jedes Satzes ortsfest an einem Stützelement, vorzugsweise einer Seitenwand (35) bzw. im Bereich von Führungen (36, 37), angeordnet sind.

12. Vorrichtung nach einem der Ansprüche 8 bis 11, **dadurch gekennzeichnet, daß** die Spann- oder Führungswalzen (19, 22; 23, 26) sowie Ausgleichswalzen (31; 32) jedes Satzes im Bereich der Trennfuge (18) derart angeordnet ist, daß die Förderelemente (11, 12) einen S-förmigen Verlauf aufweisen.

13. Vorrichtung nach einem der Ansprüche 1 bis 12, **dadurch gekennzeichnet, daß** jeder Satz Umlenkwalzen zusätzlich mindestens eine Steuerwalze (27, 28; 29, 30) aufweist, wobei die Steuerwalzen (27; 29) am Verschiebeelement (33) angeordnet sind.

14. Vorrichtung nach einem der Ansprüche 1 bis 13, **dadurch gekennzeichnet, daß** eine gemeinsame Spannvorrichtung (38) für beide Förderelemente (11, 12) vorgesehen ist.

15. Vorrichtung nach einem der Ansprüche 1 bis 14, **dadurch gekennzeichnet, daß** die Förderelemente (11, 12) als umlaufende, endlose Transportbänder oder Transporttücher ausgebildet sind.

16. Vorrichtung nach einem der Ansprüche 1 bis 15, **dadurch gekennzeichnet, daß** der Vorrichtung (10) zusätzlich Mittel zugeordnet sind, mittels der die Gegenstände in Richtung der quer zur Antransportrichtung der Gegenstände verlaufenden Förderelemente (11, 12) transportierbar und auf diesen absetzbar sind.

17. Vorrichtung nach Anspruch 16, **dadurch gekennzeichnet, daß** das zusätzliche Mittel ein quer zur Vorrichtung (10) bzw. den Förderelementen (11, 12) verlaufendes Förderelement und/oder einen Zangenwagen (51) umfaßt.

18. Vorrichtung nach einem der Ansprüche 1 bis 17, **dadurch gekennzeichnet, daß** jedem Transportbereich (13, 14) jeweils eine Stützeinrichtung (60, 61) zugeordnet ist, die ihrerseits jeweils in Transportrichtung des Verschiebeelementes (33) längenveränderbar sind.

## Claims

1. Apparatus for conveying objects transversely to their direction of initial transport, essentially including two endlessly rotating conveying elements (11, 12) which each have a transport region (13, 14) and a return region (15, 16) and can be driven independently of each other by means of a drive, so that delivered objects can be transported to both sides of the apparatus when actuating the conveying elements (11, 12), and are located opposite each other, forming a dividing gap (18) with an imaginary centre axis (17), in each case a set of deflecting rollers for guiding, tensioning and equalising the conveying elements, a sliding element (33) for changing the transport region (13, 14) or return region (15, 16), whereby the sliding element (33) connects the conveying elements (11, 12) to each other, and an equalising element (34) for compensating for the change in the return region (15, 16) or transport region (13, 14), **characterized in that** the sliding element (33) and the equalising element (34) are separate elements.

2. Apparatus according to claim 1, **characterized in that** the equalising element (34) connects the conveying elements (11, 12) to each other independently of the sliding element (33).

3. Apparatus according to claim 1 or 2, **characterized in that** the sliding element (33) can be driven actively and the equalising element (34) can be moved passively.

4. Apparatus according to claim 3, **characterized in that** the sliding element (33) and the equalising element (34) are movable parallel and in opposite directions to each other in a horizontal plane, whereby the movement of the sliding element (33) can be transmitted automatically to the equalising element (34).

5. Apparatus according to any one of claims 1 to 4, **characterized in that** the sliding element (33) is functionally connected to the equalising element (34) via the conveying elements (11, 12).

6. Apparatus according to any one of claims 1 to 5, **characterized in that** a displacement of the sliding element (33) and hence of the dividing gap (18) can be compensated by means of the equalising element (34).

7. Apparatus according to any one of claims 1 to 6, **characterized in that** the sliding element (33) is designed as a sliding carriage and the equalising element (34) is designed as an equalising carriage.

8. Apparatus according to any one of claims 1 to 7, **characterized in that** each set of deflecting rollers consists of at least three tensioning or guiding rollers (19, 20, 22; 23, 24, 26) and at least one equalising roller (31; 32).

9. Apparatus according to claim 8, **characterized in that** the equalising rollers (31; 32) are arranged on the equalising element (34) or equalising carriage.

10. Apparatus according to claim 8 or 9, **characterized in that** on the sliding element (33) or sliding carriage is arranged in each case a tensioning or guiding roller (19; 23) of each set.

11. Apparatus according to any one of claims 1 to 10, **characterized in that** the other deflecting rollers of each set are arranged stationarily on a supporting element, preferably a side wall (35), or in the region of guides (36, 37).

12. Apparatus according to any one of claims 8 to 11, **characterized in that** the tensioning or guiding rollers (19, 22; 23, 26) and equalising rollers (31; 32) of each set are arranged in the region of the dividing gap (18) in such a way that the conveying elements (11, 12) have an S-shaped path.

13. Apparatus according to any one of claims 1 to 12, **characterized in that** each set of deflecting rollers has in addition at least one control roller (27, 28; 29, 30), whereby the control rollers (27; 29) are arranged on the sliding element (33).

14. Apparatus according to any one of claims 1 to 13, **characterized in that** a common tensioning apparatus (38) is provided for both conveying elements (11, 12).

15. Apparatus according to any one of claims 1 to 14, **characterized in that** the conveying elements (11, 12) are designed as rotating, endless conveyor belts or transport cloths.

16. Apparatus according to any one of claims 1 to 15, **characterized in that** the apparatus (10) is additionally assigned means whereby the objects can be transported in the direction of the conveying elements (11, 12) running transversely to the direction of initial transport of the objects, and deposited thereon.

17. Apparatus according to claim 16, **characterized in that** the additional means includes a conveying element running transversely to the apparatus (10) or to the conveying elements (11, 12), and/or a gripper carriage (51).

18. Apparatus according to any one of claims 1 to 17, **characterized in that** each transport region (13, 14) is assigned a supporting device (60, 61) which for its part is in each case variable in length in the direction of transport of the sliding element (33).

## Revendications

1. Dispositif pour transporter des objets dans une direction transversale à leur direction de transport d'amenée, comprenant essentiellement deux éléments de transport (11, 12) conçus sans fin et à défilement continu, qui présentent chacun une zone d'acheminement (13, 14) et une zone de retour (15, 16) et peuvent être entraînés indépendamment l'un de l'autre au moyen d'un système d'entraînement, afin que des objets amenés par transport, lorsque les éléments de transport (11, 12) sont entraînés, puissent être acheminés vers les deux côtés du dispositif, lesquels éléments de transport sont placés l'un en vis-à-vis de l'autre avec formation d'un joint de séparation (18) présentant un axe médian imaginaire (17), ainsi que des groupes respectifs de rouleaux de renvoi destinés à guider, tendre et compenser les éléments de transport, un élément de translation (33) destiné à modifier la zone d'acheminement (13, 14) ou la zone de retour (15, 16), l'élément de translation (33) reliant l'un à l'autre les éléments de transport (11, 12), et un élément de compensation (34) destiné à compenser la modification de la zone de retour (15, 16), respectivement de la zone d'acheminement (13, 14), **caractérisé en ce que** l'élément de translation (33) et l'élément de compensation (34) sont des éléments distincts.

2. Dispositif selon la revendication 1, **caractérisé en ce que** l'élément de compensation (34) relie les éléments de transport (11, 12) l'un à l'autre indépendamment de l'élément de translation (33).

3. Dispositif selon la revendication 1 ou 2, **caractérisé en ce que** l'élément de compensation (33) peut être entraîné activement et l'élément de translation (34) est déplaçable passivement.

4. Dispositif selon la revendication 3, **caractérisé en ce que** l'élément de translation (33) et l'élément de compensation (34) sont déplaçables parallèlement l'un à l'autre et dans des sens contraires, dans un plan horizontal, le déplacement de l'élément de translation (33) étant communicable de façon forcée à l'élément de compensation (34).

5. Dispositif selon l'une des revendications 1 à 4, **caractérisé en ce que** l'élément de translation (33) est placé en liaison de coopération avec l'élément de compensation (34) par l'intermédiaire des éléments de transport (11, 12).

6. Dispositif selon l'une des revendications 1 à 5, **caractérisé en ce qu'**une translation de l'élément de translation (33) et donc du joint de séparation (18) est compensable au moyen de l'élément de compensation (34).

7. Dispositif selon l'une des revendications 1 à 6, **caractérisé en ce que** l'élément de translation (33) est conçu sous forme d'un chariot de translation et l'élément de compensation (34), sous forme d'un chariot de compensation.

8. Dispositif selon l'une des revendications 1 à 7, **caractérisé en ce que** chaque groupe de rouleaux de renvoi est constitué d'au moins trois rouleaux de mise en tension ou de guidage (19, 20, 22 ; 23, 24, 26) et d'au moins un rouleau de compensation (31 ; 32).

9. Dispositif selon la revendication 8, **caractérisé en ce que** les rouleaux de compensation (31 ; 32) sont disposés sur l'élément de compensation (34) ou le chariot de compensation.

10. Dispositif selon la revendication 8 ou 9, **caractérisé en ce que** sur l'élément de translation (33) ou le chariot de translation est disposé un rouleau respectif de mise en tension ou de guidage (19 ; 23) de chaque groupe.

11. Dispositif selon l'une des revendications 1 à 10, **caractérisé en ce que** les autres rouleaux de renvoi de chaque groupe sont disposés, en position fixe, sur un élément d'appui, de préférence une paroi latérale (35) ou dans la région de guides (36, 37).

12. Dispositif selon l'une des revendications 8 à 11, **caractérisé en ce que** les rouleaux de mise en tension ou de guidage (19, 22 ; 23, 26) ainsi que les rouleaux de compensation (31 ; 32) de chaque groupe sont positionnés dans la région du joint de séparation (18) d'une manière telle que les éléments de transport (11, 12) présentent une allure de développement en forme de S.

13. Dispositif selon l'une des revendications 1 à 12, **caractérisé en ce que** chaque groupe de rouleaux de renvoi présente, en plus, au moins un rouleau de commande (27, 28 ; 29, 30), les rouleaux de commande (27 ; 29) étant disposés sur l'élément de translation (33).

14. Dispositif selon l'une des revendications 1 à 13, **caractérisé en ce qu'**un dispositif de mise en tension (38) commun est prévu pour les deux éléments de transport (11, 12).

15. Dispositif selon l'une des revendications 1 à 14, **caractérisé en ce que** les éléments de transport (11, 12) sont conçus sous la forme de bandes transporteuses ou de toiles transporteuses sans fin, à défilement continu.

16. Dispositif selon l'une des revendications 1 à 15, **caractérisé en ce qu'**au dispositif (10) sont associés en plus des moyens, à l'aide desquels les objets peuvent être transportés en direction des éléments de transport (11, 12) se développant dans une direction transversale à la direction de transport d'amenée des objets et déposés dessus.

17. Dispositif selon la revendication 16, **caractérisé en ce que** le moyen additionnel comprend un élément de transport se développant transversalement au dispositif (10) ou aux éléments de transport (11, 12) et/ou un chariot à pinces (51).

18. Dispositif selon l'une des revendications 1 à 17, **caractérisé en ce qu'**à chaque zone d'acheminement (13, 14) est associée une structure d'appui (60, 61) respective, qui de son côté est d'une longueur variable dans la direction de transport de l'élément de translation (33).
